Europäisches Patentamt

European Patent Office

Office européen des brevets

(11) Veröffentlichungsnummer: **0 519 094 A1**

## EUROPÄISCHE PATENTANMELDUNG

(21) Anmeldenummer: **91109915.8**

(51) Int. Cl.5: **H04N 5/08**

(22) Anmeldetag: **17.06.91**

(43) Veröffentlichungstag der Anmeldung:
**23.12.92 Patentblatt 92/52**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Heymann, Roland, Dipl.-Ing.**
**Hirschbergstrasse 31 A**
**W-8029 Sauerlach(DE)**

(54) Einrichtung zum Empfang von Videosignalen mit einer Impulsabtrennstufe.

(57) Einrichtungen zum Empfang von Videosignalen benötigen für die Horizontal- und Vertikalablenkung von Bildzeilen auch bei stark gestörtem Videosignal zu richtigen Zeitpunkten erscheinende Synchronimpulse. Die Impulsabtrennstufe weist dazu ein Amplitudensieb mit nachgeschalteter Impulsformerstufe auf. Die gesamte Impulsabtrennstufe stellt Synchronimpulse bereit, deren Start- und Endflanken zeitlich innerhalb von Originalsynchronsignalen des Videosignales liegen. Als mögliche Impulsformerstufe kann z. B. ein nicht nachtriggerbares Monoflop vorgesehen werden.

FIG 1

EP 0 519 094 A1

Die Erfindung betrifft eine Einrichtung zum Empfang von Videosignalen mit einer Impulsabtrennstufe, wie diese im Oberbegriff des Anspruches 1 angegeben ist.

Eine solche Einrichtung ist z. B. in dem Buch von Peter Zastrow "Fernseh-Empfangstechnik", 3. Auflage, 1980 erschienen im Frankfurter Fachverlag, beschrieben. Auf den Seiten 229 bis 238 wird das Prinzip eines Amplitudensiebes vorgestellt, durch das Originalsynchronsignale des Videosignales vom Bildinhalt und von möglichen Störsignalen befreit werden können.

Problematisch bei diesen bekannten Amplitudensiebschaltungen ist, daß der zeitliche Verlauf der Orginalsynchronsignale unverändert gelassen wird. Damit liegt ein vom Amplitudensieb bereitgestellter Synchronimpuls immer durch die Signalaufbereitung im Amplitudensieb zeitlich verzögert zum Originalsynchronsignal. Wegen der im Vergleich zu Originalzeilensynchronsignalen kürzeren Vor- und Nachtrabanten in der Bildaustastlücke sind die von den bekannten Amplitudensiebschaltungen bereitgestellten Zeilensynchronimpulse zusätzlich auch noch in ihrer Breite variabel, was unerwünscht ist.

Der Erfindung liegt daher die Aufgabe zugrunde, eine Einrichtung zum Empfang von Videosignalen mit einer Impulsabtrennstufe anzugeben, deren Synchroneimpulse weder in ihrer Breite variieren noch eine zeitliche Verzögerung zum Originalsynchronsignal des Videosignales aufweisen.

Diese Aufgabe wird erfindungsgemäß durch die kennzeichnenden Merkmale des Anspruchs 1 gelöst.

Weiterbildungen der Erfindung sind Gegenstand der Unteransprüche.

Die Erfindung wird im folgenden anhand von vier Figuren näher erläutert. Es zeigen:

FIG 1    eine Prinzipdarstellung einer Einrichtung zum Empfang von Videosignalen mit einer Impulsabtrennstufe

FIG 2    Bildsynchronisiersignale beim Wechsel von einem ersten Halbbild auf ein zweites Halbbild in einem 625 Zeilen aufweisenden Fernsehsignal,

FIG 3    eine Prinzipdarstellung der erfindungsgemäßen Impulsabtrennstufe, und

FIG 4    eine mögliche Schaltungsanordnung der Impulsabtrennstufe von FIG 3.

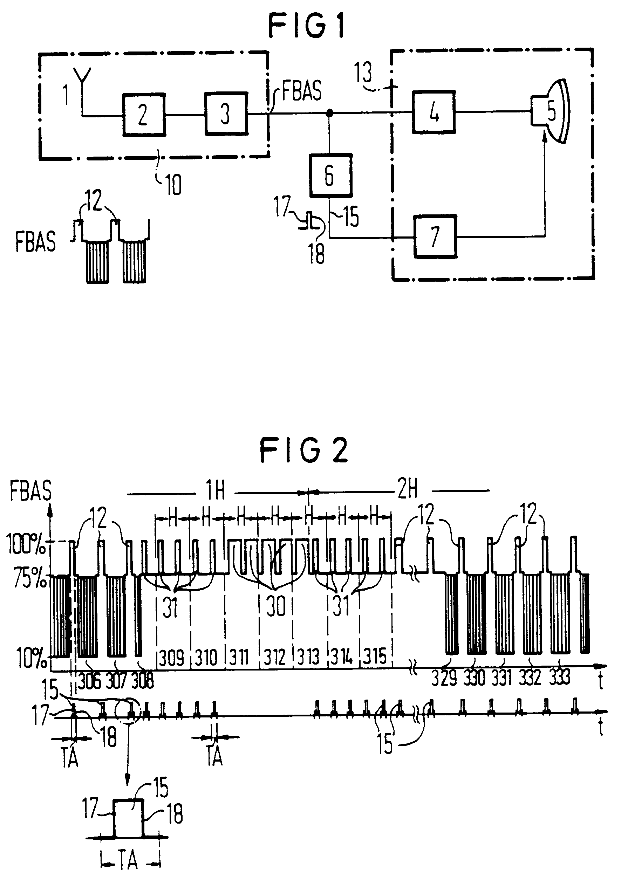

In FIG 1 ist eine Einrichtung zum Empfang von Videosignalen anhand eines Fernsehempfängers dargestellt, der ein Empfangsteil 10 zum Empfangen und Verstärken der Videosignale, eine Impulsabtrennstufe 6 zum Abtrennen von Originalsynchronsignalen 12 aus dem Videosignal sowie eine Videosignalverarbeitungsstufe 13 zum Verarbeiten der Videosignale nach Maßgabe von aus dem Originalsynchronsignal erzeugbaren Synchronimpulsen aufweist. Der Einfachheit halber wurde in FIG 1 der Tonweg im Fernsehempfänger nicht dargestellt.

Das Empfangsteil 10 weist eine Antenne 1 auf, an die ein Tuner 2 mit nachgeschaltetem Bild-ZF-Verstärker 3 angeschlossen ist. Am Ausgang dieses Bild-ZF-Verstärkers 3 ist ein FBAS (Farb-Bild-Austast-Synchron)-Signal abgreifbar, das einerseits einem Videoverstärker 4 und andererseits der bereits erwähnten Impulsabtrennstufe 6 zugeführt wird. Am Ausgang der Impulsabtrennstufe 6, wie weiter unten noch im einzelnen näher erläutert wird, ist ein BAS (Bild-Austast-Synchron)-Signal abgreifbar. Die Impuls-Abtrennstufe 6 dient also dazu, aus dem FBAS-Signal den Farbanteil wegzufiltern. Vorzugsweise dient die Impulsabtrennstufe 6 zusätzlich noch dazu, das FBAS-Signal von hohen Störfrequenzen zu befreien. Der Ausgang des Videoverstärkers 4 ist mit einer Bildröhre 5 in Verbindung. Zusätzlich weist der Fernsehempfänger nach FIG 1 eine Ablenkeinrichtung 7 auf, die an den Ausgang der Impulsabtrennstufe 6 geschaltet ist und die zur Horizontal- und Vertikalablenkung der am Ausgang des Videoverstärkers 4 anstehenden Videosignale dient. Die Videosignalverarbeitungsstufe 13 enthält also sowohl den Videoverstärker 4, die Ablenkeinrichtung 7 sowie die Bildröhre 5.

Bei den bisher bekannten Einrichtungen zum Empfang von Videosignalen mit einer Impulsabtrennstufe war es üblich, als Impulsabtrennstufe ein Amplitudensieb - ggf. mit Störaustastung - vorzusehen. Das Amplitudensieb dient dazu, aus den Originalsynchronsignalen des Videosignales, also den Originalbildsynchronsignalen und Originalzeilensynchronsignalen, Zeilensynchronimpulse und Bildsynchronimpulse für die Bildablenkung bereitzustellen. Der Einfachheit halber wird nachfolgend nur vom Bereitstellen der Zeilensynchronimpulse gesprochen, was aber keine Einschränkung bedeuten soll.

Bei den bekannten Amplitudensiebschaltungen tritt zwangsweise durch die Signalaufbereitung in der Amplitudensiebschaltung eine zeitliche Verzögerung der Synchronimpulse am Ausgang der Amplitudensiebschaltung gegenüber den Originalsynchronsignalen des Videosignals am Eingang der Amplitudensiebschaltung auf. Zusätzlich sind die Synchronimpulse am Ausgang der Amplitudensiebschaltung wegen der in Videosignalen üblichen kürzeren Ausgleichssignale - auch Vor- und Nachtrabanten genannt - in ihrer Breite unterschiedlich, je nach dem, ob ein Originalzeilensynchronsignal oder ein Ausgleichssynchronsignal am Eingang der Amplitudensiebschaltung lag. Für eine zeitrichtige Verarbeitung der Videosignale kann dies jedoch problematisch werden.

Erfindungsgemäß wird deshalb der Amplitudensiebschaltung eine Impulsformerstufe nachgeschaltet, wobei die Impulsformerstufe zum Bilden von Synchronimpulsen vorgesehen ist, deren Start- und Endflanken zeitlich innerhalb des Originalsynchronsignales des Videosignales liegt.

Zum leichteren Verständnis wird auf FIG 2 verwiesen, das ein FBAS-Signal beim Wechsel vom ersten Halbbild auf ein zweites Halbbild (ein 625-Zeilen-Fernsehsystem vorausgesetzt) zeigt. Ein Wechsel vom ersten Halbbild 1H zum zweiten Halbbild 2H erfolgt in der Mitte der 313ten Bildzeile. Der Halbbildwechsel ist durch Bildwechselimpulse 30 gekennzeichnet, die dem Halbbildwechsel unmittelbar vorausgehen. Mit 12 sind Zeilensynchronsignale und mit 31 Ausgleichssynchronsignale des FBAS-Signales bezeichnet. Eine Zeilendauer ist in FIG 2 mit H gekennzeichnet. Die Ausgleichssynchronsignal 31 treten im halben Zeilenabstand H/2 auf. Ohne diese Ausgleichssynchronsignale 31 - die vor den Bildwechselimpulsen 30 als Vortrabanten und nach den Bildwechselimpulsen 31 als Nachtrabanten bezeichnet werden - würde ein Bildwechsel nicht genau in der Zeilenmitte oder am Zeilenanfang beginnen. Im Gegensatz zu den Originalzeilensynchronsignalen 12, die jeweils eine Breite von etwa 6 μsec aufweisen, haben die Ausgleichssynchronsignale 31 eine geringere Breite, etwa 2,3 μsec. .

Die erfindungsgemäße Impulsabtrennstufe 6 erzeugt Synchronimpulse 15, die zeitlich richtig zu den Synchronsignalen 12, 31 des FBAS-Signales liegen. Um diese Zeitrichtigkeit zu gewährleisten, muß von den zeitlich kürzesten Synchronsignalen und damit den Ausgleichssynchronsignalen 31 ausgegangen werden. Die Ausgleichssynchronsignale 31 definieren dabei ein Zeitfenster, innerhalb dem der von der Impulsabtrennstufe 6 zu generierende Synchronimpuls 15 liegen muß. Das Zeitfenster eines Ausgleichssynchronsignales 31 ist in FIG 2 mit TA bezeichnet. Innerhalb dieses Zeitfensters TA muß sowohl die Startflanke 17 als auch Endflanke 18 des Synchronimpulses 15 liegen.

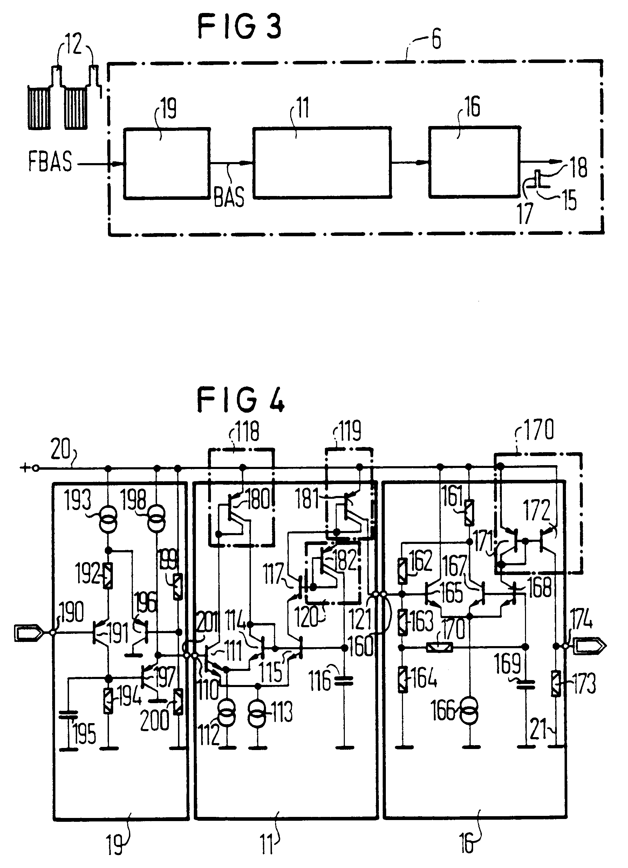

FIG 3 zeigt ein Blockschaltbild einer Impulsabtrennstufe nach der Erfindung. Die Impulsabtrennstufe 6 weist eine Impulsformerstufe 16 auf, die dem Amplitudensieb 11 nachgeschaltet ist. Die Impulsformerstufe 16 ist zum Bilden von Synchronimpulsen 15 vorgesehen, deren Startflanken 17 und Engflanken 18 zeitlich innerhalb des Originalsynchronimpulses 12, 31 des FBAS-Signales liegen.

In einer vorteilhaften Weiterbildung der Erfindung weist die Impulsabtrennstufe 6 einen Tiefpaßeinrichtung 19 auf, die vor das Amplitudensieb 12 geschaltet ist und zum Bilden eines BAS-Signales vorgesehen ist, das von hochfrequenten Störfrequenzen befreit ist. Die Tiefpaßeinrichtung 19 sorgt für eine Zeitverzögerung t1 zwischen dem BAS-Signal an seinem Ausgang und dem FBAS-Signal an seinem Eingang. Aus dem BAS-Signal wird in dem der Tiefpaßeinrichtung 19 nachgeschalteten Amplitudensieb 11 ein Impuls gewonnen, der der Impulsformerstufe 16 zugeführt wird. In der Impulsformerstufe 16 wird aus diesem Impuls der erforderliche Synchronimpuls 15 erzeugt. Die Zeitverzögerung t1 in der Tiefpaßeinrichtung 19 wird so gewählt, daß der Impuls am Ausgang des Amplitudensiebes 11 eine definierte Verzögerung zum Originalsynchronsignal des Videosignales erhält. Die Verzögerung t1 muß auf alle Fälle kleiner als das Zeitfenster TA des Originalsynchronsignales gewählt werden, vorzugsweise kleiner als die Hälfte des Zeitfensters TA. Damit auch die Endflanke 18 des Synchronimpulses 15 innerhalb des Zeitfensters TA des Originalsynchronsignales liegt, wird der Impuls am Ausgangs des Amplitudensiebes 11 durch die Impulsformerstufe 16 zeitlich verkürzt. Besonders einfach erfolgt dies durch ein nicht nachtriggerbares Monoflop, wie es im Zusammenhang mit FIG 4 noch detailliert beschrieben wird. Es hat sich als zweckmäßig erwiesen, eine Haltezeit t2 des Monoflops zu wählen, die folgende Bedingungen erfüllt:

$$t2 < ts - 2\,t1$$

Wobei gilt:

t1 = Tiefpaßverzögerung
t2 = Monoflophaltezeit
ts = Zeitfenster des kürzesten Originalsynchronsignales (bei Videosignalen die Ausgleichssignale in der Bildaustastlücke)

FIG 4 zeigt eine mögliche Ausführungsform der Impulsabtrennstufe 6 von FIG 3 anhand einer konkreten Schaltungsanordnung. Das Amplitudensieb 11 weist auf:

- eine Eingangsklemme 110,
- einen npn-Multiemittertransistor 111, dessen Basisanschluß mit der Eingangsklemme 110 verbunden ist, dessen Kollektoranschluß über eine erste Last 118 an ein positives Potential 20 angeschlossen ist, dessen erster Emitteranschluß über eine erste Stromquelle 112 auf Bezugspotential 21 liegt und dessen zweiter Emitteranschluß über eine zweite Stromquelle 113 auf Bezugspotential 21 liegt,
- einen ersten npn-Transistor 114, dessen Emitteranschluß mit dem ersten Emitteranschluß des npn-Multiemittertransistors 111 verbunden ist und dessen Basisanschluß und Kollektoranschluß über die erste Last 118 an das positive Potential 20 geschaltet sind,
- einen zweiten npn-Transistor 115, dessen Basisanschluß mit dem Basisanschluß des ersten npn-Transistors 114 verbunden ist, dessen Emitteranschluß mit dem zweiten Emitteranschluß des npn-Multiemittertransistors 111 verbunden ist und dessen Kollektoranschluß über einen dritten npn-Transistor 117 und eine zweite Last 119 an das positive Potential 20 geschaltet ist,
- einen Kondensator 116, der zwischen den Basisanschluß des zweiten npn-Transistors 115 und Bezugspotential 21 geschaltet ist,
- den dritten npn-Transistor 117, dessen Emitteranschluß mit dem Kollektoranschluß des zweiten npn-Transistors 115 verbunden ist, dessen Kollektoranschluß über die zweite Last 119 an das positive Potential 20 geschaltet ist und dessen Basisanschluß über eine dritte Last 120 mit seinem eigenen Kollektoranschluß geschaltet ist,
- die dritte Last 120, die zwischen den Kondensator 116 und den Kollektoranschluß des dritten npn-Transistors 117 geschaltet ist, und
- eine Ausgangsklemme 121, die über die zweite Last 119 an das positive Potential 20 geschaltet ist.

Die erste Last 118, zweite Last 119 und dritte Last 120 sind in diesem Ausführungsbeispiel eines Amplitudensiebes als Stromspiegel mit pnp-Multikollektortransistoren ausgeführt. Die erste Last 118 weist einen ersten pnp-Multikollektortransistor 180 auf, dessen Emitteranschluß auf positivem Potential 20 liegt, dessen Basisanschluß mit dessen ersten Kollektoranschluß verbunden und an den Kollektoranschluß des ersten npn-Multiemittertransistors 111 angeschlossen ist und dessen zweiter Kollektoranschluß mit dem Kollektoranschluß des ersten npn-Transistors 114 verbunden ist. Die zweite Last 119 ist durch einen zweiten pnp-Multikollektortransistor 181 gebildet, dessen Emitteranschluß auch auf positivem Potential 20 liegt und dessen Basisanschluß mit dessen ersten Kollektoranschluß verbunden und an den Kollektoranschluß des dritten npn-Transistors 117 angeschlossen ist und dessen zweiter Kollektoranschluß mit der Ausgangsklemme 121 in Verbindung steht. Die dritte Last 120 ist durch einen dritten pnp-Multikollektortransistor 182 gebildet, dessen Emitteranschluß mit dem Basisanschluß und ersten Kollektoranschluß des zweiten pnp-Multikollektortransistors 181 verbunden ist und dessen Basisanschluß und erster Kollektoranschluß mit dem Basisanschluß des dritten npn-Transistors 117 verbunden ist und dessen zweiter Kollektoranschluß mit den Basisanschlüssen des ersten npn-Transistors 114 und dem Basisanschluß des zweiten npn-Transistors 115 verbunden ist.

Die Impulsformerstufe 16 von FIG 4 ist durch ein nicht nachtriggerbares Monoflop realisiert. Unter nicht nachtriggerbarem Monoflop ist dabei zu verstehen, daß stets der erste Impuls einer Impulsfolge die Schaltzeit des Monoflops bestimmt. Das Monoflop von FIG 4 weist auf:
- eine Eingangsklemme 160,
- eine Reihenschaltung eines ersten Widerstandes 161, eines zweiten Widerstandes 162, eines dritten Widerstandes 163 mit einem vierten Widerstand 164, die zwischen das positive Potential 20 und Bezugspotential 21 liegt, wobei die Eingangsklemme 160 an einen Verbindungspunkt des zweiten Widerstandes 162 und des dritten Widerstandes 163 angeschlossen ist,
- einen vierten npn-Transistor 165, dessen Basisanschluß mit der Eingangsklemme 160 in Verbindung steht, dessen Kollektoranschluß an positives Potential 20 geschaltet ist und dessen Emitteranschluß über eine dritte Stromquelle 166 auf Bezugspotential 21 geschaltet ist,
- einen fünften npn-Transistor 167, dessen Basisanschluß über einen zweiten Kondensator 169 an Bezugspotential 21 geschaltet ist, dessen Emitteranschluß mit dem Emitteranschluß des vierten npn-Transistors 165 verbunden ist und dessen Kollektoranschluß mit einem Verbindungspunkt des ersten Widerstandes 161 und zweiten Widerstandes 162 in Verbindung steht,
- einen sechsten npn-Transistor 168, dessen Basisanschluß mit dem Basisanschluß des fünften npn-Transistors 167 verbunden ist, dessen Emitteranschluß mit dem Emitteranschluß des fünften npn-Transistors 167 verbunden ist und dessen Kollektoranschluß über eine vierte Last 170 an positives Potential 20 geschaltet ist,
- einen fünften Widerstand 170, der zwischen einen Verbindungspunkt des dritten Widerstandes 163 und vierten Widerstandes 164 einerseits und den Basisanschluß des sechsten npn-Transistors 168 andererseits geschaltet ist, und
- eine Ausgangsklemme 174, die zwischen die vierte Last 170 und einen sechsten Widerstand angeschlossen ist.

Die vierte Last 170 ist durch einen Stromspiegel mit den pnp-Transistoren 171, 172 gebildet. Die Emitteranschlüsse dieser beiden pnp-Transistoren 171, 172 liegen auf positivem Potential 20. Die Basisanschlüsse der beiden Transistoren 171 und 172 sind miteinander verbunden und zugleich an den Kollektoranschluß des pnp-Transistors 171 sowie den Kollektoranschluß des npn-Transistors 168 angeschlossen. Der Kollektoranschluß des pnp-Transistors 172 ist einerseits mit der Ausgangsklemme 174 des Monoflops und andererseits über einen Widerstand 173 mit dem Bezugspotential 21 in Verbindung.

Die Tiefpaßeinrichtung 19 von FIG 4 weist auf:
- eine Eingangsklemme 190,
- einen ersten pnp-Transistor 191, dessen Basisanschluß mit der Eingangsklemme 190

verbunden ist, dessen Emitteranschluß über die Reihenschaltung eines sechsten Widerstandes 192 mit einer Stromquelle 193 an positives Potential 20 geschaltet ist und dessen Kollektoranschluß sowohl über einen dritten Kondensator 195 als auch einen siebten Widerstand 194 an Bezugspotential 21 geschaltet ist,

- einen zweiten pnp-Transistor 196, dessen Emitteranschluß mit einem Verbindungspunkt der Stromquelle 193 und dem sechsten Widerstand 192 in Verbindung steht und dessen Kollektoranschluß an Bezugspotential 21 geschaltet ist, und dessen Basisanschluß mit einem Verbindungspunkt einer Reihenschaltung eines achten Widerstandes 199 mit einem neunten Widerstand 200 verbunden ist, wobei die Reihenschaltung des achten Widerstandes 199 mit dem neunten Widerstand 200 zwischen positives Potential 20 und Bezugspotential 21 geschaltet ist,

- einen dritten pnp-Transistor 197, dessen Basisanschluß mit dem Kollektoranschluß des ersten pnp-Transistors 191 verbunden ist, dessen Kollektoranschluß an das Bezugspotential 21 angeschlossen ist, und dessen Emitteranschluß über eine weitere Stromquelle 198 auf positives Potential 20 geschaltet ist, und

- eine Ausgangsklemme 201, die mit dem Emitteranschluß des dritten pnp-Transistors 197 in Verbindung steht.

**Patentansprüche**

1. Einrichtung zum Empfang von Videosignalen mit einem Empfangsteil (10) zum Empfangen und Verstärken der Videosignale, einer Impulsabtrennstufe (6) mit einem Amplitudensieb (11) zum Abtrennen von Orginalsynchronsignalen (12) aus dem Videosignal sowie einer Videosignalverarbeitungsstufe (13) zum Verarbeiten der Videosignale nach Maßgabe von aus den Originalsynchronsignalen (12) erzeugbaren Synchronimpulsen (15)
**dadurch gekennzeichnet,**
daß die Impulsabtrennstufe (6) eine Impulsformerstufe (16) aufweist,
daß diese Impulsformerstufe (16) dem Amplitudensieb (11) nachgeschaltet ist, und
daß die Impulsformerstufe (16) zum Bilden von Synchronimpulsen (15) vorgesehen ist, deren Startflanken (17) und Endflanken (18) zeitlich innerhalb der Originalsynchronsignale (12) liegen.

2. Einrichtung nach Anspruch 1,
**dadurch gekennzeichnet,**
daß als Videosignal ein FBAS-Signal vorgesehen ist, daß die Impulsabtrennstufe (6) eine Tiefpaßeinrichtung (19) aufweist, die vor das Amplitudensieb (11) geschaltet und zum Bilden eines aus dem FBAS-Signal von hochfrequenten Störfrequenzen befreiten BAS-Signal vorgesehen ist.

3. Einrichtung nach Anspruch 1 oder 2,
**dadurch gekennzeichnet,**
daß als Impulsformerstufe (16) eine monostabile Kippeinrichtung vorgesehen ist.

4. Einrichtung nach Anspruch 1 oder 2,
**dadurch gekennzeichnet,**
daß als Impulsformerstufe (16) ein nicht nachtriggerbares Monoflop vorgesehen ist.

5. Einrichtung nach einem der Ansprüche 1 bis 4,
**dadurch gekennzeichnet,**
daß das Amplitudensieb (11) aufweist:
- eine Eingangsklemme (110),
- einen npn-Multiemittertransistor (111), dessen Basisanschluß mit der Eingangsklemme (110) verbunden ist, dessen Kollektoranschluß über eine erste Last 118 an ein positives Potential (20) angeschlossen ist, dessen erster Emitteranschluß über eine erste Stromquelle (112) auf Bezugspotential (21) liegt und dessen zweiter Emitteranschluß über eine zweite Stromquelle (113) auf Bezugspotential (21) liegt,
- einen ersten npn-Transistor (114), dessen Emitteranschluß mit dem ersten Emitteranschluß des npn-Multiemittertransistors (111) verbunden ist und dessen Basisanschluß und Kollektoranschluß über die erste Last (118) an das positive Potential (20) geschaltet sind,
- einen zweiten npn-Transistor (115), dessen Basisanschluß mit dem Basisanschluß des ersten npn-Transistors (114) verbunden ist, dessen Emitteranschluß mit dem zweiten Emitteranschluß des npn-Multiemittertransistors (111) verbunden ist und dessen Kollektoranschluß über einen dritten npn-Transistor 117 und eine zweite Last 119 an das positive Potential (20) geschaltet ist,
- einen Kondensator (116), der zwischen den Basisanschluß des zweiten npn-Transistors (115) und Bezugspotential (21) geschaltet ist,
- den dritten npn-Transistor (117), dessen Emitteranschluß mit dem Kollektoranschluß des zweiten npn-Transistors (115) verbunden ist, dessen Kollektoranschluß über die zweite Last (119) an das positive Potential (20) geschaltet ist und dessen Basisanschluß über eine dritte Last 120 mit seinem eigenen Kollektoranschluß geschaltet ist,

- die dritte Last (120), die zwischen den Kondensator (116) und den Kollektoranschluß des dritten npn-Transistors (117) geschaltet ist, und

- eine Ausgangsklemme (121), die über die zweite Last 119 an das positive Potentail 20 geschaltet ist.

6. Einrichtung nach Anspruch 5,
**dadurch gekennzeichnet,**
daß mindestens eine der ersten Last (118), zweiten Last (119) oder dritten Last (120) als Stromspiegelschaltung ausgebildet ist.

7. Einrichtung nach einem der Ansprüche 1 bis 6,
**dadurch gekennzeichnet,**
daß die Impulsformerstufe als nicht nachtriggerbares Monoflop ausgebildet ist und aufweist:

- eine Eingangsklemme (160),

- eine Reihenschaltung eines ersten Widerstandes (161), eines zweiten Widerstandes (162), eines dritten Widerstandes (163) mit einem vierten Widerstand (164), die zwischen das positive Potential (20) und Bezugspotential (21) liegt, wobei die Eingangsklemme (160) an einen Verbindungspunkt des zweiten Widerstandes (162) und des dritten Widerstandes (163) angeschlossen ist,

- einen vierten npn-Transistor (165), dessen Basisanschluß mit der Eingangsklemme (160) in Verbindung steht, dessen Kollektoranschluß an positives Potential (20) geschaltet ist und dessen Emitteranschluß über eine dritte Stromquelle (166) auf Bezugspotential (21) geschaltet ist,

- einen fünften npn-Transistor (167), dessen Basisanschluß über einen zweiten Kondensator (169) an Bezugspotential (21) geschaltet ist, dessen Emitteranschluß mit dem Emitteranschluß des vierten npn-Transistors (165) verbunden ist und dessen Kollektoranschluß mit einem Verbindungspunkt des ersten Widerstandes (161) und zweiten Widerstandes (162) in Verbindung steht,

- einen sechsten npn-Transistor (168), dessen Basisanschluß mit dem Basisanschluß des fünften npn-Transistors (167) verbunden ist, dessen Emitteranschluß mit dem Emitteranschluß des fünften npn-Transistors (167) verbunden ist und dessen Kollektoranschluß über eine vierte Last (170) an positives Potential (20) geschaltet ist,

- einen fünften Widerstand (170), der zwischen einen Verbindungspunkt des dritten Widerstandes (163) und vierten Widerstandes (164) einerseits und den Basisanschluß des sechsten npn-Transistors (168) andererseits geschaltet ist, und

- eine Ausgangsklemme (174), die zwischen die vierte Last (170) und einen sechsten Widerstand (173) angeschlossen ist.

8. Einrichtung nach Anspruch 7,
**dadurch gekennzeichnet,**
daß die vierte Last (170) als Stromspiegelschaltung ausgebildet ist und die Ausgangsklemme (174) einerseits über einen weiteren Widerstand (173) auf Bezugspotential (21) geschaltet und andererseits mit einem Ausgang der die vierte Last (170) bildenden Stromspiegelschaltung verbunden ist.

9. Einrichtung nach einem der Ansprüche 1 bis 8,
**dadurch gekennzeichnet,**
daß die Tiefpaßeinrichtung (19) zum Befreien des Videosignales von hohen Störfrequenzen und zum Wegfiltern einer Farbinformation vorgesehen ist und aufweist:

- eine Eingangsklemme (190),

- einen ersten pnp-Transistor (191), dessen Basisanschluß mit der Eingangsklemme (190) verbunden ist, dessen Emitteranschluß über die Reihenschaltung eines sechsten Widerstandes (192) mit einer Stromquelle (193) an positives Potential (20) geschaltet ist und dessen Kollektoranschluß sowohl über einen dritten Kondensator (195) als auch einen siebten Widerstand (194) an Bezugspotential (21) geschaltet ist,

- einen zweiten pnp-Transistor (196), dessen Emitteranschluß mit einem Verbindungspunkt der Stromquelle (193) und dem sechsten Widerstand (192) in Verbindung steht und dessen Kollektoranschluß an Bezugspotential (21) geschaltet ist, und dessen Basisanschluß mit einem Verbindungspunkt einer Reihenschaltung eines achten Widerstandes (199) mit einem neunten Widerstand (200) verbunden ist, wobei die Reihenschaltung des achten Widerstandes (199) mit dem neunten Widerstand (200) zwischen positives Potential (20) und Bezugspotential (21) geschaltet ist,

- einen dritten pnp-Transistor (197), dessen Basisanschluß mit dem Kollektoranschluß des ersten pnp-Transistors (191) verbunden ist, dessen Kollektoranschluß an das Bezugspotential (21) angeschlossen ist, und dessen Emitteranschluß einerseits über eine weitere Stromquelle (198) auf positives Potential (20) geschaltet ist, und

- eine Ausgangsklemme (201), die mit dem Emitteranschluß des dritten pnp-Transistors (197) in Verbindung steht.

## FIG 1

## FIG 2

# FIG 3

# FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 360 339 (PHILIPS)<br>* Zusammenfassung *<br>* Spalte 3, Zeile 11 - Zeile 40 *<br>* Spalte 7, Zeile 12 - Zeile 38 *<br>* Abbildungen 1-2 *<br><br>--- | 1-2 | H04N5/08 |
| A | US-A-3 819 859 (BORSUK ET AL.)<br>* Zusammenfassung *<br>* Spalte 4, Zeile 43 - Zeile 50; Abbildungen 1-2 *<br><br>--- | 1-4 | |
| A | US-A-4 468 625 (TANDART ET AL.)<br>* Zusammenfassung *<br>* Spalte 4, Zeile 17 - Zeile 35; Abbildungen 1-2 *<br><br>--- | 1 | |
| A | EP-A-0 170 325 (PHILIPS)<br>* Seite 8, Zeile 29 - Seite 9, Zeile 18; Abbildungen 1,4 *<br><br>----- | 1,3-4 | |

**RECHERCHIERTE SACHGEBIETE (Int. Cl.5 )**

H04N

Der vorliegende Recherchenbericht wurde für alle Patentansprüche erstellt

| Recherchenort | Abschlußdatum der Recherche | Prüfer |
|---|---|---|
| DEN HAAG | 19 FEBRUAR 1992 | SCHINNERL A. |

EPO FORM 1503 03.82 (P0403)